# EUROPEAN PATENT APPLICATION

(11) **EP 4 397 489 A1**
(43) Date of publication of application: **10.07.2024**
(21) Application number: 22864166.8
(22) Date of filing: 03.08.2022
(51) Int. Cl.: B32B 27/32, B65D 65/02

(54) **MULTI-LAYER FILM, PACKAGING MATERIAL, AND PACKAGE**

(30) Priority: 30.08.2021 JP 2021140223
(71) Applicant: TOPPAN INC., Tokyo 110-0016 (JP)
(72) Inventor: OOKI Tomoko, Tokyo 110-0016 (JP); HAMADA Daisuke, Tokyo 110-0016 (JP)
(74) Representative: TBK
(86) International application number: PCT/JP2022/029819
(87) International publication number: WO 2023/032580

(57) **Abstract**

The present disclosure relates to a multilayer film having, in this order: a first outer layer serving as a heat-seal layer and containing a propylene homopolymer (A), a propylene-ethylene random copolymer (B), and an anti-blocking agent (C); an inner layer containing a propylene-ethylene block copolymer (D) and an ethylene-propylene copolymer elastomer (E); and a second outer layer containing the propylene homopolymer (A) and the propylene-ethylene random copolymer (B). The content of the component (C) is 0.5 to 3.0 parts by mass relative to 100 parts by mass of the components (A) and (B) together, and the component (C) includes, relative to a total mass of the component (C), 45 to 75% by mass of particles (C1) with an average particle diameter of 1.0 to 4.0 µm and 55 to 25% by mass of particles (C2) with an average particle diameter greater than 4.0 µm and equal to or smaller than 7.0 µm.

## Description

### [Technical Field]

The present invention relates to a multilayer film, a packing material, and a packaging body. Specifically, the present invention relates to a polypropylene multilayer film that has good heat resistance, transparency, and anti-blocking properties, and can be suitably used as a sealant film for packaging bodies that undergo harsh treatments such as boiling and retort treatment. The present invention also relates to a packaging material and a packaging body obtained using the polypropylene multilayer film.

### [Background Art]

Polypropylene films can be used as sealant films for various packaging materials such as those for packaging food because they have good rigidity and heat resistance, and are inexpensive.

Polypropylene films are required to have anti-blocking properties in order to prevent wrinkles from forming during processing due to poor slipperiness and blocking marks being left by blocking. For example, the following polypropylene films having anti-blocking properties have been proposed.

PTL 1 proposes a single-layer polypropylene film containing a propylene-ethylene block copolymer and a hydrogenated styrene thermoplastic elastomer, and having a center line average roughness (Ra) of 0.10 to 0.30 µm.

PTL 2 proposes a single-layer packaging film containing a propylene-ethylene block copolymer, an ethylene-α-olefin copolymer, and an anti-blocking agent.

PTL 3 proposes a retort food packaging laminate that is a polypropylene composite film composed of a plurality of layers including a heat-seal layer containing a propylene-ethylene block copolymer and a synthetic silica-based anti-blocking agent, and a plurality of layers of a propylene-ethylene block copolymer.

PTL 4 proposes a packaging film that is a polypropylene composite film composed of three layers including a surface layer containing a polypropylene resin with a melting peak temperature of 130 to 145°C and an anti-blocking agent, and an intermediate layer containing a crystalline propylene-α-olefin random copolymer with a melting peak temperature of 120 to 145°C and an ethylene-α-olefin random copolymer elastomer.

### [Citation List]

### [Patent Literature]

[PTL 1] JP 2008-255285 A
[PTL 2] JP 2001-261921 A
[PTL 3] JP 2003-41068 A
[PTL 4] JP 2004-358683 A

### [Summary of the Invention]

### [Technical Problem]

In addition to the anti-blocking properties as described above, polypropylene films are also required to have heat resistance that can withstand retort treatment, which involves pressure treatment at a high temperature of 120 to 135°C for sterilization and disinfection, as well as transparency to retain visibility of the contents. However, with conventional polypropylene films, it is currently difficult to achieve all of good heat resistance, transparency, and anti-blocking properties.

The present invention was made in view of the above circumstances, and an object of the present invention is to provide a polypropylene multilayer film having good heat resistance, transparency, and anti-blocking property. Another object of the present invention is to provide a packaging material and a packaging body obtained using the multilayer film.

### [Solution to Problem]

After conducting intensive studies to solve the above problems, the inventors found that, in a polypropylene multilayer film having a certain layered structure, it is important to include two kinds of anti-blocking particles with different particle sizes in a certain amount in the outer layer serving as the heat-seal layer. This led the inventors to complete the present invention.

A multilayer film according to an aspect of the present invention includes:
a first outer layer serving as a heat-seal layer and containing a propylene homopolymer (A), a propylene-ethylene random copolymer (B), and an anti-blocking agent (C);
an inner layer containing a propylene-ethylene block copolymer (D) and an ethylene-propylene copolymer elastomer (E); and
a second outer layer containing the propylene homopolymer (A) and the propylene-ethylene random copolymer (B), in this order, characterized in that
a content of the anti-blocking agent (C) in the first outer layer is 0.5 to 3.0 parts by mass relative to 100 parts by mass of the propylene homopolymer (A) and propylene-ethylene random copolymer (B) together, and the anti-blocking agent (C) includes, relative to a total mass of the anti-blocking agent (C), 45 to 75% by mass of anti-blocking particles (C1) with an average particle diameter of 1.0 to 4.0 µm and 55 to 25% by mass of anti-blocking particles (C2) with an average particle diameter greater than 4.0 µm and less than or equal to 7.0 µm.

In the multilayer film, the outer layers contain the propylene homopolymer (A) and propylene-ethylene random copolymer (B). The propylene homopolymer (A) has a higher melting point than the propylene-ethylene random copolymer (B). The propylene-ethylene random copolymer (B) facilitates obtaining a smooth film surface. Therefore, by providing the multilayer film with outer layers having the above structures, it is possible to maintain heat resistance (a high level of heat resistance that prevents deformation of the film or fusion between inner faces when used as a packaging body), and at the same time suppress surface unevenness which causes the transparency to decrease. Further, by containing a certain amount of anti-blocking particles having different particle diameters in the first outer layer, the film surface can have improved anti-blocking properties while maintaining transparency, which makes it possible to prevent films from adhering to each other. By providing the multilayer film with an inner layer containing the propylene-ethylene block copolymer (D) and ethylene-propylene copolymer elastomer (E), it is possible to maintain the flexibility of the multilayer film and ensure good cold impact resistance. Although the inner layer containing the above components is likely to have an uneven surface, by sandwiching the inner layer between the outer layers described above, the irregularities on the surface of the inner layer can be filled by the outer layers, and good transparency can be ensured. Such composite effects cannot be obtained with the polypropylene films described in PTL 1 to 4, and the present invention is particularly suitable for retort treatment (including high retort treatment).

For example, in PTL 1, the anti-blocking property is improved by specifying the center line average roughness (Ra) of a polypropylene film. However, since a propylene-ethylene block copolymer, which is essentially opaque, is used, it lacks transparency. Since a single layer film is formed using a propylene-ethylene block copolymer and an anti-blocking agent in PTL 2, and a propylene-ethylene block copolymer and an anti-blocking agent are used in the outer layer in PTL 3, both of them lack transparency due to surface irregularities.

In PTL 4, a polypropylene resin and an anti-blocking agent are used in the outer layer, and a crystalline propylene-ethylene random copolymer and an ethylene-α-olefin random copolymer elastomer are used in the intermediate layer. Since a combination of anti-blocking agents is not used, there is room for improvement in the anti-blocking properties.

In one aspect, the first outer layer may contain 70 to 30% by mass of the propylene homocopolymer (A) and 30 to 70% by mass of the propylene-ethylene random copolymer (B) based on a total mass of the first outer layer excluding the anti-blocking agent (C), and the second outer layer may contain 70 to 30% by mass of the propylene homocopolymer (A) and 30 to 70% by mass of the propylene-ethylene random copolymer (B) relative to a total mass of the second outer layer. This facilitates achieving both good heat resistance and transparency.

In one mode, the propylene homopolymer (A) may satisfy the following requirement (a1), and the propylene-ethylene random copolymer (B) may satisfy the following requirement (b1). This facilitates achieving both good heat resistance and transparency. Requirement (a1), the propylene homopolymer (A) has a melting start temperature of 150°C or higher and a melting peak temperature of 155°C or higher as measured by differential scanning calorimetry (JIS K 7121).
Requirement (b1), the ethylene content is 5% by mass or lower.

In one mode, the inner layer may contain 90 to 50% by mass of the propylene-ethylene block copolymer (D) and 10 to 50% by mass of the ethylene-propylene copolymer elastomer (E) based on the total mass of the inner layer. This makes it easier to maintain the flexibility of the film more fully and to provide better cold impact resistance.

In one mode, the thickness of the first and second outer layers may be 16 to 42% of the thickness of the multilayer film.

A packaging material according to an aspect of the present invention includes the above-described multilayer film and a substrate.

A packaging body according to an aspect of the present [invention, disclosure] is one made from the above-described packaging material.

### [Advantageous Effects of the Invention]

According to the present invention, a polypropylene multilayer film having good heat resistance, transparency, and anti-blocking properties can be provided. Further, according to the present invention, a packaging material and a packaging body obtained using the multilayer film can be provided.

### [Brief Description of the Drawings]

Fig. 1 is a cross-sectional view of a multilayer film according to an embodiment of the present invention.
Fig. 2 is a cross-sectional view of a packaging material according to an embodiment of the present invention.

### [Description of the Embodiments]

### <Polypropylene multilayer film>

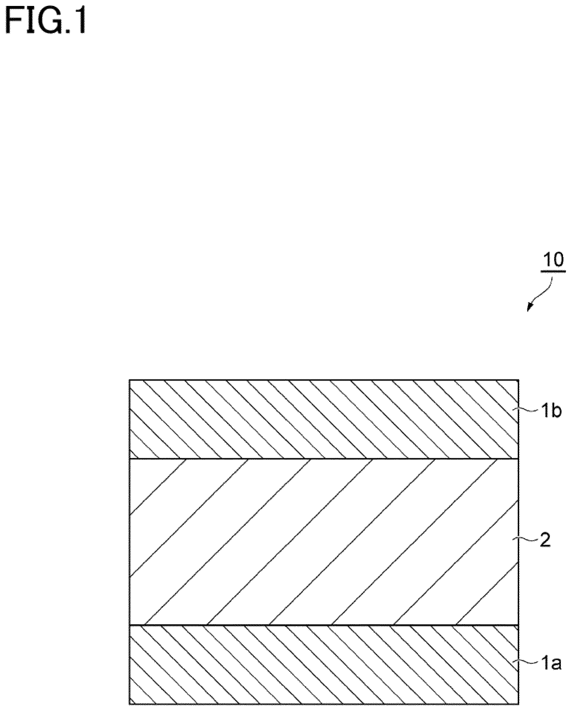

Fig. 1 is a cross-sectional view of a multilayer film according to an embodiment of the present invention. The multilayer film 10 includes a first outer layer 1a, an inner layer 2, and a second outer layer 1b in this order. The multilayer film can be used as an unstretched polypropylene sealant film.

### [First and second outer layers]

The first outer layer contains a propylene homopolymer (A), a propylene-ethylene random copolymer (B), and an anti-blocking agent (C). It can be said that the first outer layer is a layer formed from a resin composition containing the propylene homopolymer (A), propylene-ethylene random copolymer (B), and anti-blocking agent (C). When used as a packaging material, the first outer layer serves as a heat-seal layer (has heat-sealability) and is placed so that it comes into contact with the contents. Therefore, the first outer layer has enough heat resistance to prevent parts of the first outer layer from fusing together during retort treatment. The first outer layer also has a sufficient anti-blocking properties to prevent it from adhering to another film or roll in order to prevent wrinkles from forming during processing due to poor slipperiness and blocking marks being left by blocking.

The second outer layer contains a propylene homopolymer (A) and a propylene-ethylene random copolymer (B). It can be said that the second outer layer is a layer formed from a resin composition containing the propylene homopolymer (A) and propylene-ethylene random copolymer (B).

When the first and second outer layers have the above structures, the multilayer film can be provided with heat resistance, transparency, and anti-blocking properties. The first and second outers layer may be collectively and simply referred to as outer layers.

### (Propylene homopolymer (A))

Although the manufacturing method of the propylene homopolymer (A) is not particularly limited, for example, it can be obtained by homopolymerization of propylene using a Ziegler-Natta catalyst, a metallocene catalyst, or a half-metallocene catalyst. By the outer layers containing the propylene homopolymer (A), they can be provided with good heat resistance.

The propylene homopolymer (A) may have a melting start temperature of 150°C or higher and a melting peak temperature of 155°C or higher as measured by differential scanning calorimetry (JIS K 7121). A propylene homopolymer with a melting start temperature and a melting peak temperature that are within these ranges has good heat resistance so that, for example, the inner faces of the packing body are unlikely to fuse together after being subject to retort treatment at a high temperature.

The propylene homopolymer (A) may have a melt flow rate (MFR: ISO 1133) (temperature 230°C, load 2.16 kg) in the range of 2.0 to 7.0 g/10 minutes. A melt flow rate is a parameter that indicates the fluidity of a polymer material when it is melted, and is also a parameter that indicates its molecular weight. Therefore, when the melt flow rate is too high, the polymer material tends to have a reduced impact resistance, and when it is too low, the load on the extruder during molding increases, which tends to cause the processing speed to decrease and reduce productivity. Taking these into consideration, the melt flow rate can be 2.0 to 7.0 g/10 minutes, and may be 2.0 to 5.0 g/10 minutes.

### (Propylene-ethylene random copolymer (B))

Although the manufacturing method of the propylene-ethylene random copolymer (B) is not particularly limited, for example, it can be obtained by copolymerization of propylene as the main monomer with ethylene as a comonomer using a Ziegler-Natta catalyst, a metallocene catalyst, or a half-metallocene catalyst. By the outer layers containing the propylene-ethylene random copolymer (B), a multilayer film having good transparency can be obtained.

The propylene-ethylene random copolymer (B) may have a melting start temperature of 140°C or higher and a melting peak temperature of 145°C or higher as measured by differential scanning calorimetry (JIS K 7121). A propylene-ethylene random copolymer with a melting start temperature and a melting peak temperature that are within these ranges has good heat resistance so that, for example, the inner faces of the packing body are unlikely to fuse together after being subject to harsh retort treatment at 135°C for 40 minutes.

A propylene-ethylene random copolymer whose ratio ΔHₕ/ΔHₗ between the heat of fusion ΔHₕ on the higher side of the measurement temperature of 135°C and the heat of fusion ΔHₗ on the lower side thereof when differential scanning calorimetry (JIS K 7121) is performed is in the range of 1.5 to 2.5 can be used as the propylene-ethylene random copolymer (B). When the ratio is equal to or lower than the upper limit, the flexibility of the film is maintained, which prevents edge breakage in the heat-sealed part after retort treatment, and therefore the strength of the heat seal is unlikely to decrease. The lower limit of the ratio can be set at 1.5 in order to prevent fusion between inner faces of the packaging body after retort treatment.

The ethylene content in the propylene-ethylene random copolymer (B) can be 5% by mass or less. When the ethylene content is equal to or lower than the upper limit, the heat resistance does not decrease excessively while maintaining transparency, which facilitates preventing fusion between inner faces of the packaging body after retort treatment. In this regard, the ethylene content may be 4.5% by mass or less, or 4% by mass or less. Although the lower limit of the ethylene content is not particularly limited, to maintain the flexibility of the film so that edge break in the heat-sealed part is prevented after retort treatment and the strength of the heat seal is unlikely to decrease, it may be 2% by mass or lower.

The ethylene content in the propylene-ethylene random copolymer (B) can be measured according to the quantification method (IR spectroscopy) for ethylene content specified in Handbook of Polymer Analysis and Characterization (3rd edition), edited by The Japan Society for Analytical Chemistry, Conference on Polymer Analysis and Characterization, May 10 2013, pp 412 to 413.

The outer layers may contain 70 to 30% by mass of the propylene homocopolymer (A) and 30 to 70% by mass of the propylene-ethylene random copolymer (B) relative to the total mass of the outer layers (excluding the anti-blocking agent (C) in the case of the first outer layer). When the content of the propylene homopolymer (A) is 30% by mass or more, good heat resistance is likely to be maintained. When the content of the propylene homopolymer (A) is 70% by mass or less, that is, the content of the propylene-ethylene random copolymer (B) is 30% by mass or more, good transparency and heat-sealability are likely to be achieved. In these regards, the outer layers may contain 60 to 40% by mass of the propylene homopolymer (A) and 40 to 60% by mass of the propylene-ethylene random copolymer (B).

The outer layers may contain one or more components (such as another resin or additive) other than the propylene homopolymer (A) and propylene-ethylene random copolymer (B). However, in order to improve transparency and heat resistance, the total content of the propylene homopolymer (A) and propylene-ethylene random copolymer (B) relative to the total mass of the outer layer (excluding the anti-blocking agent (C) in the case of the first outer layer) may be 70% by mass or more, 90% by mass or more, or 100% by mass.

An example of the additional component is a propylene-ethylene block copolymer (D), in which the content of the propylene-ethylene block copolymer (D) relative to the total mass of the outer layer (excluding the anti-blocking agent (C) in the case of the first outer layer) may be 10% by mass or less, 5% by mass or less, or 0% by mass. By reducing the content of the propylene-ethylene block copolymer (D) in the outer layer, or by not including the propylene-ethylene block copolymer (D) in the outer layer, it is possible to prevent the multilayer film from having an uneven surface and thus reduced transparency. This further improves the transparency of the multilayer film.

Another example of the additional component is a slip agent. Examples of slip agents include common slip agents used to form films such as erucic acid amide and bisoleic acid amide. The slip agent is used to improve the anti-blocking property and slipperiness of the film, but depending on the storage conditions and product processing conditions, it may migrate to the surface layer (bleed-out) and degrade the anti-blocking properties. Therefore, the outer layers preferably do not contain a slip agent. By using a certain anti-blocking agent (C), good anti-blocking properties can still be obtained without the outer layers containing a slip agent.

### (Anti-blocking agent (C))

An anti-blocking agent (AB agent) is an additive that has the effect of suppressing adhesion (blocking) between films by providing the film with an uneven surface. The anti-blocking agent is used by adding a small amount thereof to a polymer compound. By adding the anti-blocking agent (C) into the first outer layer serving as the heat-seal layer, the first outer layer is provided with an un even surface. This reduces the contact area between films or between a film and a roll and improves the anti-blocking properties. Therefore, the slipperiness and anti-blocking properties during the film processing process can be improved. Examples of the anti-blocking agent include inorganic particles such as silica, zeolite, talc, kaolin, and diatomite particles, and organic particles (polymer beads) such as acrylic particles and silicone particles. These different kinds of particles may be used singly or in combination of two or more. The particles may be subj ected to surface treatment using stearic acid, a silane coupling agent, a titanium coupling agent, or the like.

The content of the anti-blocking agent (C) may be 0.5 to 3.0 parts by mass relative to 100 parts by mass of the propylene homopolymer (A) and propylene-ethylene random copolymer (B) together. When the content is equal to or higher than the lower limit, good anti-blocking properties can be ensured. On the other hand, when the content is equal to or lower than the higher limit, the transparency is maintained. When the content is within the above range, it is possible to achieve both transparency and anti-blocking properties. In these regards, the content of the anti-blocking agent (C) may be 0.6 to 2.8 parts by mass, 0.6 to 2.75 parts by mass, or 1.0 to 2.0 parts by mass.

The anti-blocking agent (C) contains two kinds of anti-blocking particles having different average particle diameters. Specifically, the anti-blocking agent (C) includes anti-blocking particles (C1) with an average particle diameter of 1.0 to 4.0 µm and anti-blocking particles (C2) with an average particle diameter greater than 4.0 µm and less than or equal to 7.0 µm. This makes it possible to achieve both good transparency and a good anti-blocking property. In this regard, the average particle diameter of the anti-blocking particles (C1) may be 1.5 to 4.0 µm, 2.0 to 4.0 µm, or 2.5 to 3.5 µm, and the average particle diameter of the anti-blocking particles (C2) may be greater than 4.0 µm and less than or equal to 6.5 µm, greater than 4.0 µm and equal to or smaller than 6.0 µm, or greater than 4.5 and less than or equal to 5.5 µm. The average particle diameters of the anti-blocking particles are measured using the Coulter Counter method (ISO 13319).

The anti-blocking agent (C) contains 45 to 75% by mass of anti-blocking particles (C1) and 55 to 25% by mass of anti-blocking particles (C2) based on the total mass of the anti-blocking agent (C). When the two kinds of anti-blocking particles are mixed so as to suffice these ranges, a good anti-blocking property can be ensured while suppressing a decrease in transparency. In this regard, the content of the anti-blocking particles (C1) may be 50-70% by mass, and the content of the anti-blocking particles (C2) may be 50-30% by mass.

To achieve both good transparency and a good anti-blocking property, the surface roughness Sa of the first outer layer may be 0.07 to 0.12 µm, or 0.09 to 0.10 µm. To achieve both good transparency and a good anti-blocking property, the skewness Ssk of the first outer layer may be 1.5 to 5.0, or 3.0 to 4.0. The surface roughness Sa and skewness Ssk of the first outer layer can be measured as the arithmetic mean height Sa and the degree of deviation, respectively, as specified in ISO 25178 using a laser microscope.

After forming the first outer layer, the content of the anti-blocking agent (C) and the mixture ratio of the anti-blocking particles (C1) and (C2) can be calculated by detecting the anti-blocking particles in the layer by, for example, three-dimensional measurement using X-ray CT.

### [Inner layer]

The inner layer contains a propylene-ethylene block copolymer (D) and an ethylene-propylene copolymer elastomer (E). The inner layer is preferably flexible in order to have impact resistance to prevent the bag from being damaged in low-temperature environments. It can be said that the inner layer is a layer formed from a resin composition containing the propylene-ethylene block copolymer (D) and ethylene-propylene copolymer elastomer (E).

### (Propylene-ethylene block copolymer (D))

The propylene-ethylene block copolymer (D) can be obtained by first producing a propylene polymer (D1) in a first step, and then producing an ethylene-propylene copolymer (D2) by gas-phase polymerization in a second step. The propylene-ethylene block copolymer (D) is not a block copolymer in which a terminal of a propylene polymer and a terminal of an ethylene-propylene copolymer are bonded together, but is a kind of blended copolymer. By the inner layer containing the propylene-ethylene block copolymer (D), the flexibility of the film is maintained, and therefore good cold impact resistance is likely to be obtained.

The propylene-ethylene block copolymer (D) may have a melt flow rate (MFR: ISO 1133) (temperature 230°C, load 2.16 kg) in the range of 0.5 to 2.5 g/10 minutes. When the melt flow rate is too high, the film tends to have a reduced impact resistance, and when it is too low, the load on the extruder during molding increases, which tends to cause the processing speed to decrease and reduce productivity. Taking these into consideration, the melt flow rate can be 0.5 to 2.5 g/10 minutes, and may be 1.0 to 2.0 g/10 minutes.

The propylene-ethylene block copolymer (D) may contain 90 to 60% by mass of the propylene polymer (D1) and 10 to 40% by mass of the ethylene-propylene copolymer (D2). A good cold impact resistance is likely to be obtained when the components are within these respective ranges.

The ethylene content in the ethylene-propylene copolymer (D2) contained in the propylene-ethylene block copolymer (D) is not particularly limited, but can be 20 to 40% by mass. When the ethylene content is below the upper limit, the tackiness of the product can be suppressed, which facilitates maintaining good productivity because the product is less likely to be contaminated during production due to the product being tacky. When the ethylene content is equal to or higher than the lower limit, the flexibility of the film is maintained and a good cold impact resistance likely to be obtained.

### (Ethylene-propylene copolymer elastomer (E))

The ethylene-propylene copolymer elastomer (E) can be produced by, for example, slurry polymerization in the presence of an inert hydrocarbon such as hexane, heptane, or kerosene, or a liquefied α-olefin solvent such as propylene; or by gas-phase polymerization without a solvent. Specifically, the ethylene-propylene copolymer elastomer (E) can be obtained using a known multistage polymerization method. That is, it is a polymerized high rubber-content polypropylene resin obtained by forming a propylene and/or propylene-α-olefin polymer in a first stage polymerization reaction, and copolymerizing propylene and α-olefin in a second stage reaction. By the inner layer containing the ethylene-propylene copolymer elastomer (E), the film can be easily provided with flexibility, and therefore good cold impact resistance is likely to be obtained.

The ethylene-propylene copolymer elastomer (E) may have a melt flow rate (MFR: ISO 1133) (temperature 230°C, load 2.16 kg) in the range of 0.5 to 3.5 g/10 minutes. When the melt flow rate is equal to or higher than the lower limit, the load on the extruder during molding is reduced, which makes the processing speed less likely to decrease and facilitates maintaining good productivity. When the melt flow rate is equal to or lower than the upper limit, compatibility between the propylene-ethylene block copolymer (D) and the ethylene-propylene copolymer elastomer (E) improves, and transparency is unlikely to decrease.

The mass ratio of the propylene content and the ethylene content (propylene content/ethylene content) in the ethylene-propylene copolymer elastomer (E) may be in the range of 1.5 to 4. When the ratio is equal to or higher than the lower limit, the flexibility of the film is maintained and good cold impact resistance likely to be obtained. When the ratio is equal to or lower than the upper limit, the compatibility between the propylene-ethylene block copolymer (D) and the ethylene-propylene copolymer elastomer (E) improves, and transparency is unlikely to decrease.

The inner layer may contain 90 to 50% by mass of the propylene-ethylene block copolymer (D) and 10 to 50% by mass of the ethylene-propylene copolymer elastomer (E) relative to the total mass of the inner layer. When the content of the propylene-ethylene block copolymer (D) is 50% by mass or more, good cold impact resistance is likely to be maintained. Further, when the content of the propylene-ethylene block copolymer (D) is 90% by mass or less, that is, the content of the ethylene-propylene copolymer elastomer (E) is at least 10% by mass or more, even better heat sealability can be obtained. In these regards, the inner layer may contain 80 to 60% by mass of the propylene-ethylene block copolymer (D) and 20 to 40% by mass of the ethylene-propylene copolymer elastomer (E).

The inner layer may contain one or more components (another resin or additive) other than the propylene-ethylene block copolymer (D) and the ethylene-propylene copolymer elastomer (E). However, in order to improve flexibility and cold impact resistance, the total content of the propylene-ethylene block copolymer (D) and the ethylene-propylene copolymer elastomer (E) together may be 80% by mass or more, 90% by mass or more, or 100% by mass or more based on the total mass of the inner layer.

### [Layer thickness]

The thickness of the multilayer film is not particularly limited as long as it can be used, for example, as a film as a packaging material, but if the film is too thick, it will suffer a cost disadvantage. The thickness of the multilayer film can be equal to or smaller than 100 µm, and may be 50 to 70 µm.

The thickness of the outer layers (that is, the total thickness of the first and second outer layers) may be 16 to 42%, or 25 to 42% of the thickness of the multilayer film. When the thickness ratio of the outer layers is equal to or higher than the lower limit, good transparency is likely to be obtained, and when it is equal to or lower than the upper limit, it is possible to suppress a decrease in the impact resistance and heat sealability of the film. This facilitates obtaining a practical film. The thickness of the first outer layer can be 7 to 20 µm, or 10 to 15 µm in order to improve the anti-blocking property.

The inner layer may have a thickness of 20 µm or greater, or 30 µm or greater. This allows the film to maintain its flexibility so that the film is less likely to break after retort treatment, and the strength of the heat seal is less likely to decrease. Although the upper limit of the thickness of the inner layer is not particularly limited, for example, considering the cost, it may be 80 µm or smaller, 70 µm or smaller, or 50 µm or smaller.

### [Method of manufacturing multilayer film]

The method of producing a multilayer film is not particularly limited, and any known method can be used. For example, thermoforming methods include melt-mixing methods carried out using general mixing machines such as single screw extruders, twin screw extruders, and multi-screw extruders, as well as methods in which the components are first dissolved or dispersed and mixed, and then the solvent is removed by heating. Considering work efficiency, a single screw extruder or a twin screw extruder can be used. When using a single-screw extruder, the screw may be a full-flight screw, a screw with a mixing element, a barrier-flight screw, a fluted screw, or the like, and these can be used without particular limitation. The twin-screw mixer may be a corotating twin-screw extruder, a counter-rotating twin-screw extruder, or the like. As for the screw shape. a full-flight screw, a kneading disk type, or the like may be used without particular limitation.

Among the above methods, a method can be used in which the multilayer film is melted with a single-screw extruder or twin-screw extruder, and then formed into a film using a T-die through a feed block or multi-manifold.

The obtained multilayer film may be subjected to a surface modification treatment to improve suitability for post-processing, if necessary. For example, in order to improve printability when used as a single film or to improve suitability for lamination when used in a laminate, a surface modification treatment may be performed on the printing surface or the surface that comes into contact with the substrate. Examples of surface modification treatment include treatments for providing functional groups by oxidizing the film surface, such as corona discharge treatment, plasma treatment, and flame treatment, and wet process modification treatments for forming an adhesion-enhancing layer through coating.

### <Packaging material>

The multilayer film may be used as a single film or laminated with a substrate, and its usage as a packaging material is not particularly limited.

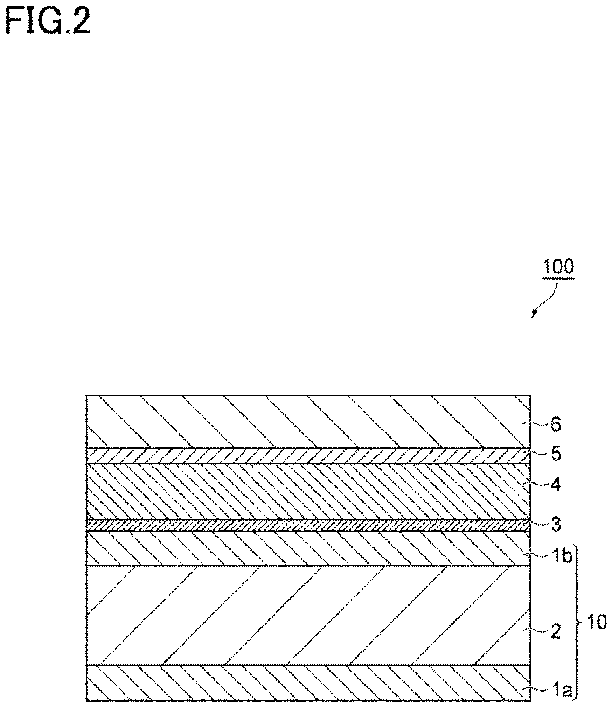

When the multilayer film is used by laminating it with a substrate, the packaging material can include the multilayer film and the substrate. Specifically, such a packaging material may be formed by forming a laminate by laminating, on the above-described multilayer film 10, at least one substrate layer such as a biaxially oriented polyamide film (ONy), biaxially oriented polyester film (PET), printing paper, metal foil (AL foil), or transparent deposited film. Fig. 2 is a cross-sectional view of a packaging material according to an embodiment of the present invention. A packaging material 100 shown in the figure includes the multilayer film 10, an adhesive layer 3, a transparent deposited film 4, an adhesive layer 5, and a substrate film 6 in this order. In this case, the packaging material 100 is used so that the multilayer film 10 (the first outer layer 1a) is on the contents side. Normal dry lamination in which the films forming the laminate are bonded together using an adhesive can be suitably adopted as the laminate manufacturing method. If necessary, it can also be manufactured by directly extrusion laminating the multilayer film on the substrate.

The laminate structure of the laminate can be adjusted as appropriate depending on the required characteristics of the packaging body, such as barrier properties that can ensure the shelf life of the packaged food, a size and impact resistance that can endure the weight of the contents, visibility of the contents, and so on.

### <Packaging body>

The packaging body may be a bag made from the above packaging material, and the manner in which the bag is made is not particularly limited. For example, the packaging material (laminate) can be applied to flat bags, three-sided bags, pillow bags, gusset bags, standing pouches, pouches with spouts, pouches with beaks, and the like that use a multilayer film as a sealant.

### <Summary of present embodiment>

### [Invention 1]

A multilayer film having: a first outer layer serving as a heat-seal layer and containing a propylene homopolymer (A), a propylene-ethylene random copolymer (B), and an anti-blocking agent (C);
an inner layer containing a propylene-ethylene block copolymer (D) and an ethylene-propylene copolymer elastomer (E); and
a second outer layer containing a propylene homopolymer (A) and a propylene-ethylene random copolymer (B), in this order,

In which the content of the anti-blocking agent (C) is 0.5 to 3.0 parts by mass relative to 100 parts by mass of the propylene homopolymer (A) and propylene-ethylene random copolymer (B) together, and
the anti-blocking agent (C) includes, relative to the total mass of the anti-blocking agent (C), 45 to 75% by mass of anti-blocking particles (C1) with an average particle diameter of 1.0 to 4.0 µm and 55 to 25% by mass of anti-blocking particles (C2) with an average particle diameter greater than 4.0 µm and equal to or smaller than 7.0 µm.

### [Invention 2]

The multilayer film according to Invention 1, characterized in that the first outer layer contains 70 to 30% by mass of the propylene homocopolymer (A) and 30 to 70% by mass of the propylene-ethylene random copolymer (B) relative to the total mass of the first outer layer excluding the anti-blocking agent (C), and
the second outer layer contains 70 to 30% by mass of the propylene homocopolymer (A) and 30 to 70% by mass of the propylene-ethylene random copolymer (B) relative to the total mass of the second outer layer.

### [Invention 3]

The multilayer film according to Invention 1 or 2, characterized in that the propylene homopolymer (A) satisfies the following requirement (a1), and the propylene-ethylene random copolymer (B) satisfies the following requirement (b1):
Requirement (a1), the propylene homopolymer (A) has a melting start temperature of 150°C or higher and a melting peak temperature of 155°C or higher as measured by differential scanning calorimetry (JIS K 7121).
Requirement (b 1), the ethylene content is 5% by mass or lower.

### [Invention 4]

The multilayer film according to any one of Inventions 1 to 3, characterized in that the inner layer contains 90 to 50% by mass of the propylene-ethylene block copolymer (D) and 10 to 50% by mass of the ethylene-propylene copolymer elastomer (E) relative to the total mass of the inner layer.

### [Invention 5]

The multilayer film according to any one of Inventions 1 to 4, characterized in that a total thickness of the first and second outer layers is 16 to 42% of a thickness of the multilayer film.

### [Invention 6]

A packaging material including the multilayer film according to any one of Inventions 1 to 5 and a substrate.

### [Invention 7]

A packaging body obtained by making a bag from the packaging material according to Invention 6.

### Examples

The present invention will be described in detail using the Examples described below, but the present invention is not limited to only those Examples.

### <Preparation of materials>

The following propylene homopolymer (A) (resin (A)), propylene-ethylene random copolymer (B) (resin (B)), propylene-ethylene block copolymer (D) (resin (D)), ethylene-propylene copolymer elastomer (E) (resin (E)), and three kinds of anti-blocking particles (C) with different average particle diameters (silica (C1), silica (C2), silica (C3)) were prepared.

### (Propylene homopolymer (A))

A propylene homopolymer having a melting start temperature of 153°C and a melting peak temperature of 159°C as measured by differential scanning calorimetry (JIS K 7121), and a melt flow rate (MFR: ISO 1133) (temperature 230°C, load 2.16 kg) of 3.0 g/10 minutes.

### (Propylene-ethylene random copolymer (B))

A propylene-ethylene random copolymer having a melting start temperature of 142°C and a melting peak temperature of 147°C as measured by differential scanning calorimetry (JIS K 7121), ΔHₕ/ΔHₗ of 1.84, and an ethylene content of 3.4% by mass.

The ethylene content was measured according to the quantification method (IR spectroscopy) for ethylene content specified in Handbook of Polymer Analysis and Characterization (3rd edition), edited by The Japan Society for Analytical Chemistry, Conference on Polymer Analysis and Characterization, May 10 2013, pp 412 to 413.

The ratio ΔHₕ/ΔHₗ is the ratio between the heat of fusion ΔHₕ on the higher side of the measurement temperature of 135°C and the heat of fusion ΔHₗ on the lower side thereof when differential scanning calorimetry (JIS K 7121) is performed.

### (Propylene-ethylene block copolymer (D))

A propylene-ethylene block copolymer having a melt flow rate (MFR: ISO 1133) (temperature 230°C, load 2.16 kg) of 2.0 g/10 minute and containing 77.1% by mass of a propylene polymer and 22.9% by mass of an ethylene-propylene copolymer. The ethylene content in the ethylene-propylene copolymer is 28.7% by mass.

### (Ethylene-propylene copolymer elastomer (E))

An ethylene-propylene copolymer elastomer having a melt flow rate (MFR: ISO 1133) (temperature 230°C, load 2.16 kg) of 0.6 g/10 minute and whose mass ratio (propylene content/ethylene content) between the propylene content and the ethylene content is 2.7.

### (Anti-blocking agent (C) (AB agent))

Silica (C1): Silica particles having an average particle diameter (Coulter counter measurement, ISO 13319) of 3 µm.

Silica (C2): Silica particles having an average particle diameter (Coulter counter measurement, ISO 13319) of 5 µm.

Silica (C3): Silica particles having an average particle diameter (Coulter counter measurement, ISO 13319) of 10 µm.

### <Preparation of multilayer film>

### (Example 1)

To form the first outer layer, a resin mixture was prepared by mixing 50 parts by mass of the propylene homopolymer (A), 50 parts by mass of the propylene-ethylene random copolymer (B), and the silica (C1) and silica (C2) as the anti-blocking agent (C) in pellet form. The anti-blocking agent (C) was added in an amount of 2.0 parts by mass in total based on 100 parts by mass of the propylene homopolymer (A) and propylene/ethylene random copolymer (B) together, and the silica (C1) and silica (C2) were each added in an amount of 50% by mass relative to the total mass of the anti-blocking agent.

To form the second outer layer, a resin mixture was prepared by mixing 50 parts by mass of the propylene homopolymer (A) and 50 parts by mass of the propylene-ethylene random copolymer (B) in pellet form.

To form the inner layer, a resin mixture was prepared by mixing 67.8 parts by mass of the propylene-ethylene block copolymer (D) and 32.2 parts by mass of the ethylene-propylene copolymer elastomer (E) in pellet form.

The resin mixtures were supplied to an extruder whose temperature was controlled to 250°C, kneaded in a melted state, and then laminated using a T-die extruder with a feed block so that the first and second outer layers each have a thickness of 10 µm, and the inner layer has a thickness of 40 µm. The film of Example 1 was thus formed.

### (Examples 2 and 3)

The films of Examples 2 and 3 were prepared in the same manner as in Example 1, except that the total amount of the anti-blocking agent (C) was changed as shown in Table 1.

### (Examples 4 to 6)

The films of Examples 4 to 6 were prepared in the same manner as in Example 1, except that the mixture ratio of the silica (C1) and silica (C2) and the total amount of the anti-blocking agent were changed as shown in Table 1.

### (Comparative Example 1)

The film of Comparative Example 1 was prepared in the same manner as in Example 1, except that the anti-blocking agent (C) was not added.

### (Comparative Example 2)

The film of Comparative Example 2 was prepared in the same manner as in Example 1, except that only the silica (C1) was used as the anti-blocking agent (C).

### (Comparative Example 3)

The film of Comparative Example 3 was prepared in the same manner as in Example 1, except that only the silica (C2) was used as the anti-blocking agent (C).

### (Comparative Examples 4 and 5)

The films of Comparative Examples 4 and 5 were prepared in the same manner as in Example 1, except that the total amount of the anti-blocking agent (C) was changed as shown in Table 1.

### (Comparative Examples 6 and 7)

The films of Comparative Examples 6 and 7 were prepared in the same manner as in Example 1, except that the mixture ratio of the silica (C1) and silica (C2) and the total amount of the anti-blocking agent (C) were changed as shown in Table 1.

### (Comparative Example 8)

The film of Comparative Example 8 was prepared in the same manner as in Example 1, except that the silica (C1) was replaced by the silica (C3), and their mixture ratio and total amount were changed as shown in Table 1.

### (Comparative Example 9)

The film of Comparative Example 9 was prepared in the same manner as in Example 1, except that the silica (C2) was replaced by the silica (C3), and their mixture ratio and total amount were changed as shown in Table 1.

### <Evaluations>

The following evaluations were performed on each of the films obtained from the Examples. The results are shown in Table 1 or 2.

### <Measurement of haze>

For each Example, a 297 mm x 420 mm bag was prepared using the obtained film, and 800 g of water was put inside. After sealing the bag, the bag was subjected to retort treatment at 135°C for 40 minutes. A 50 mm x 50 mm film sample was cut out from the bag after the retort treatment, and evaluated using a haze meter (model number COH 7700) manufactured by Nippon Denshoku Industries Co., Ltd., in accordance with the haze measurement method described in JIS K7136. Since the lower the haze value, the better the transparency, the haze values were rated based on the following four criteria.
S: 15% or lower
A: higher than 15% and 20% or lower
B: higher than 20 % and 25% or lower
C: higher than 25%

### [Fusion strength measurement]

Using a heat sealer manufactured by Tester Sangyo Co., Ltd., parts of the first outer layer the film obtained in each Example were heat-sealed together when facing each other with a sealing pressure of 0.03 MPa, sealing time of 30 seconds, sealing width of 10mm, and sealing temperature of 135°C. After that, a 15 mm wide x 80 mm piece was cut out from the heat-sealed film, and a T-peel test was performed at a pulling speed of 300 mm/min using a tensile tester manufactured by Shimadzu Corporation to measure the fusion strength of the heat-sealed part. Since the lower the fusion strength, the better the heat resistance, the fusion strength was rated based on the following four criteria.
S: 0.5 N/15 mm or lower
A: higher than 0.5 N/15 mm and 1 N/15 mm or lower
B: higher than 1 N/15 mm and 2 N/15 mm or lower
C: higher than 2 N/15 mm

### [Blocking strength measurement]

The film obtained in each Example was cut into four 120 mm width x 300 mm pieces. Then, after making two pairs of two films stacked so that the first and second outer layers face each other, the stacks were further stacked so that the first and second outer layers face each other. Using a slitter manufactured by Toshin Co., Ltd., 10 m of a 100 mm wide PET film (G2 #25 manufactured by Toyobo Film Solutions) was wound around a 3-inch core at a winding speed of 10 m/min. Then, the four cut out films were inserted in a stacked state as described above, and the film was further wound for 20 m under the same conditions to apply pressure to the four films. Adjustments were made so that a pressure of 0.3 MPa (as measured using a pressure measurement film "Prescale" LLLW and Prescale pressure image analysis system FPD-9210 manufactured by Fujifilm Holdings Corporation) is applied to the films. After keeping the wound rolls in an aging room at 40°C for 7 days, each of the stacks was separated into two pairs of two films (the above-described two pairs), and a 30 mm width x 100 mm length piece was cut out from each of them. For each of the pieces, 35 mm of the bonded films were peeled apart from each end in the length direction. The upper film was cut off at one end, and the lower film was cut off at the other end so that a sample with a 30 mm x 30 mm bonded area is obtained. The obtained samples were subjected to shear peeling at a pulling speed of 300 mm/min using a tensile tester manufactured by Shimadzu Corporation to measure the blocking strength. The measurement was performed five times, and the average value was taken as the measured value. Since the lower the blocking strength, the better the anti-blocking property, the blocking strength was rated based on the following four criteria.
S: 5 N/900 mm² or lower
A: higher than 5 N/900 mm² and 10 N/900 mm² or lower
B: higher than 10 N/900 mm² and 15 N/900 mm² or lower
C: higher than 15 N/900 mm²

### [Surface texture evaluation]

The surface roughness Sa and skewness Ssk of the first outer layer of each of the films obtained from the Examples were measured as the arithmetic mean height Sa and the degree of deviation, respectively, as specified in ISO 25178, using a laser microscope.

**[Table 1]**

| | | | Examples | | | | | |
|---|---|---|---|---|---|---|---|---|
| | | | 1 | 2 | 3 | 4 | 5 | 6 |
| First outer layer composition | Resin (A) | Parts by mass | 50 | 50 | 50 | 50 | 50 | 50 |
| | Resin (B) | Parts by mass | 50 | 50 | 50 | 50 | 50 | 50 |
| | Silica (C1) | Mass% | 50 | 50 | 50 | 70 | 70 | 70 |
| | Silica (C2) | Mass% | 50 | 50 | 50 | 30 | 30 | 30 |
| | Silica (C3) | Mass% | - | - | - | - | - | - |
| | Total amount of AB agent* | Parts by mass | 2.0 | 0.7 | 2.7 | 0.7 | 2.0 | 2.7 |
| Inner layer composition | Resin (D) | Parts by mass | 67.8 | 67.8 | 67.8 | 67.8 | 67.8 | 67.8 |
| | Resin (E) | Parts by mass | 32.2 | 32.2 | 32.2 | 32.2 | 32.2 | 32.2 |
| Second outer layer composition | Resin (A) | Parts by mass | 50 | 50 | 50 | 50 | 50 | 50 |
| | Resin (B) | Parts by mass | 50 | 50 | 50 | 50 | 50 | 50 |
| Haze (after retort treatment) | | | A | S | S | S | A | A |
| Fusion strength | | | S | S | S | S | S | S |
| Blocking strength | | | S | A | S | A | S | S |

| | | | Comparative Examples | | | | | | | | |
|---|---|---|---|---|---|---|---|---|---|---|---|
| | | | 1 | 2 | 3 | 4 | 5 | 6 | 7 | 8 | 9 |
| First outer layer composition | Resin (A) | Parts by mass | 50 | 50 | 50 | 50 | 50 | 50 | 50 | 50 | 50 |
| | Resin (B) | Parts by mass | 50 | 50 | 50 | 50 | 50 | 50 | 50 | 50 | 50 |
| | Silica (C1) | Mass% | - | 100 | - | 50 | 50 | 70 | 30 | - | 50 |
| | Silica (C2) | Mass% | - | - | 100 | 50 | 50 | 30 | 70 | 50 | - |
| | Silica (C3) | Mass% | - | - | - | - | - | - | - | 50 | 50 |
| | Total amount of AB agent* | Parts by mass | 0 | 2.0 | 2.0 | 0.3 | 4.0 | 4.0 | 0.7 | 0.7 | 2.7 |
| Inner layer composition | Resin (D) | Parts by mass | 67.8 | 67.8 | 67.8 | 67.8 | 67.8 | 67.8 | 67.8 | 67.8 | 67.8 |
| | Resin (E) | Parts by mass | 32.2 | 32.2 | 32.2 | 32.2 | 32.2 | 32.2 | 32.2 | 32.2 | 32.2 |
| Second outer layer composition | Resin (A) | Parts by mass | 50 | 50 | 50 | 50 | 50 | 50 | 50 | 50 | 50 |
| | Resin (B) | Parts by mass | 50 | 50 | 50 | 50 | 50 | 50 | 50 | 50 | 50 |
| Haze (after retort treatment) | | | S | S | S | S | B | C | S | B | B |
| Fusion strength | | | S | A | A | S | S | S | A | S | B |
| Blocking strength | | | C | B | B | B | S | S | B | B | S |

**[Table 2]**

| | Surface roughness Sa | Skewness Ssk |
|---|---|---|
| Ex. 1 | 0.09 | 4.0 |
| Ex. 2 | 0.07 | 2.1 |
| Ex. 3 | 0.09 | 3.0 |
| Ex. 4 | 0.07 | 2.1 |
| Ex. 5 | 0.10 | 2.5 |
| Ex. 6 | 0.11 | 2.3 |
| Comp. Ex. 1 | 0.03 | 0.9 |
| Comp. Ex. 2 | 0.06 | 2.0 |
| Comp. Ex. 3 | 0.06 | 2.9 |
| Comp. Ex. 4 | 0.06 | 2.1 |
| Comp. Ex. 5 | 0.13 | 2.2 |
| Comp. Ex. 6 | 0.15 | 2.4 |
| Comp. Ex. 7 | 0.06 | 2.1 |
| Comp. Ex. 8 | 0.14 | 6.7 |
| Comp. Ex. 9 | 0.21 | 5.9 |

### [Industrial Applicability]

The polypropylene multilayer film of the present invention has great heat resistance, transparency, and anti-blocking property, and can be suitably used as a sealant film for retort packaging.

### [Reference Signs List]

- 10: Multilayer film
- 100: Packaging material
- 1a: First outer layer
- 1b: Second outer layer
- 2: Inner layer
- 3: Adhesive layer
- 4: Transparent deposited film
- 5: Adhesive layer
- 6: Substrate film

## Claims

1. A multilayer film comprising, in this order:
a first outer layer serving as a heat-seal layer and containing a propylene homopolymer (A), a propylene-ethylene random copolymer (B), and an anti-blocking agent (C);
an inner layer containing a propylene-ethylene block copolymer (D) and an ethylene-propylene copolymer elastomer (E); and
a second outer layer containing the propylene homopolymer (A) and the propylene-ethylene random copolymer (B), wherein
a content of the anti-blocking agent (C) is 0.5 to 3.0 parts by mass relative to 100 parts by mass of the propylene homopolymer (A) and propylene-ethylene random copolymer (B) together, and
the anti-blocking agent (C) includes, based on a total mass of the anti-blocking agent (C), 45 to 75% by mass of anti-blocking particles (C1) with an average particle diameter of 1.0 to 4.0 µm and 55 to 25% by mass of anti-blocking particles (C2) with an average particle diameter greater than 4.0 µm and equal to or smaller than 7.0 µm.

2. multilayer film according to claim 1, **characterized in that** the first outer layer contains 70 to 30% by mass of the propylene homocopolymer (A) and 30 to 70% by mass of the propylene-ethylene random copolymer (B) relative to a total mass of the first outer layer excluding the anti-blocking agent (C), and
the second outer layer contains 70 to 30% by mass of the propylene homocopolymer (A) and 30 to 70% by mass of the propylene-ethylene random copolymer (B) relative to a total mass of the second outer layer.

3. The multilayer film according to claim 1 or 2, **characterized in that** the propylene homopolymer (A) satisfies the following requirement (a1), and the propylene-ethylene random copolymer (B) satisfies the following requirement (b1):
requirement (a1): the propylene homopolymer (A) has a melting start temperature of 150°C or higher and a melting peak temperature of 155°C or higher as measured by differential scanning calorimetry (JIS K 7121), and
requirement (b1): an ethylene content is 5% by mass or lower.

4. The multilayer film according to claim 1 or 2, **characterized in that** the inner layer contains 90 to 50% by mass of the propylene-ethylene block copolymer (D) and 10 to 50% by mass of the ethylene-propylene copolymer elastomer (E) relative to a total mass of the inner layer.

5. The multilayer film according to claim 1 or 2, **characterized in that** a total thickness of the first and second outer layers is 16 to 42% of a thickness of the multilayer film.

6. A packaging material comprising the multilayer film according to claim 1 or 2 and a substrate.

7. A packaging body obtained by making a bag from the packaging material according to claim 6.
